# EUROPÄISCHE PATENTSCHRIFT

(11) **EP 3 021 027 B1**
(45) Veröffentlichungstag und Bekanntmachung des Hinweises auf die Patenterteilung: **31.01.2018**
(21) Anmeldenummer: 15194523.5
(22) Anmeldetag: 13.11.2015
(51) Int. Cl.: F16L 17/025, F16L 21/03

(54) **ROHRVERBINDUNG**
PIPE CONNECTION
RACCORD DE TUYAUTERIE

(30) Priorität: 17.11.2014 DE 202014009089 U
(43) Veröffentlichungstag der Anmeldung: 18.05.2016
(73) Patentinhaber: Wavin B.V., 8011 CW Zwolle (NL)
(72) Erfinder: Brümmer, Günter, 49740 Haselünne (DE)
(74) Vertreter: Hoffmann Eitle

(56) Entgegenhaltungen:
- WO-A1-2009/094679
- DE-A1- 2 614 575

## Beschreibung

Die Erfindung betrifft eine Rohrverbindung mit einer Rohrmuffe, die eine Ringsicke aufweist, welche von einem Sickengrund und einer in Einsteckrichtung ersten Sickenwand und einer dieser gegenüberliegenden weiteren Sickenwand begrenzt ist. Die Rohrverbindung weist darüber hinaus ein Einsteckrohr mit einem Einsteckende und einer Außenmantelfläche sowie eine in der Ringsicke befindliche, elastische Ringdichtung auf. Die Ringdichtung liegt mit an einer Ringdichtungsaußenseite angeordneten Außendichtlippen am Sickengrund an und weist an der der Ringdichtungsaußenseite gegenüberliegenden Ringdichtungsinnenseite eine oder mehrere Innendichtlippen zur Abdichtung gegenüber der Außenmantelfläche des Einsteckrohres im Verbindungszustand der Rohrverbindung auf. In diesem Verfahrenszustand ist das Einsteckrohr in die Rohrmuffe eingesteckt, und die Außenmantelfläche des Einsteckrohres ist über die Ringdichtung gegenüber der Rohrmuffe abgedichtet.

Eine Rohrverbindung der vorgenannten Art ist aus der DE 43 27 163 C2 bekannt. Die Ringdichtung dieser Rohrverbindung weist eine Spannlippe auf, die ein Einrollen der Ringdichtung beim Einschieben des Spitzendes eines einzuschiebenden Rohres in die Rohrmuffe verhindert. Die Spannlippe ist dabei sowohl im Vorverbindungszustand als auch im Verbindungszustand der Rohrverbindung an die Rohrmuffe angedrückt. Im Verbindungszustand dichtet die Spannlippe die Rohrmuffe gegenüber von außerhalb der Rohrverbindung eindringendem Wasser, wie beispielsweise Grundwasser, ab. Die Ringverbindung weist zudem eine Haltelippe, eine Abstreiflippe und eine Dichtlippe (Hauptdichtlippe) auf, die jeweils an der Außenmantelfläche des Einsteckrohres im Verbindungszustand anliegen und sowohl gegenüber einströmendem Wasser von außerhalb des Rohres als auch gegenüber aus der Rohrverbindung austretendem Wasser abdichten. Mit zunehmendem Wasserdruck des außerhalb der Rohrverbindung befindlichen und auf die Ringdichtung einwirkenden Grundwassers wird die Stützlippe und auch die Haltelippe, Abstreiflippe und Hauptlippe von der Außenmantelfläche des Einsteckrohres weggedrückt, so dass Grundwasser in die Rohrverbindung ungewünscht eindringen kann. Darüber hinaus sind die Stützfunktion und die Funktionen zur Verhinderung des Eindringens von Schmutz in die Ringsicke bei einem weiten Toleranzbereich der Bemaßung der Ringsicke nicht immer gegeben.

Aus WO-A1-2009/094679 ist eine Steckverbindung zum Verbinden von Kühlwasserleitungen bekannt.

DE-A1-26 14 575 offenbart eine Rohrverbindung mit den Merkmalen des Oberbegriffs des Anspruchs 1.

Der vorliegenden Erfindung liegt die Aufgabe zugrunde, eine Ringverbindung der eingangs genannten Art bereitzustellen, bei der die vorgenannten Nachteile beseitigt sind.

Diese Aufgabe wird durch eine Rohrverbindung der eingangs genannten Art gelöst, die zudem die Merkmale des kennzeichnenden Teils des Anspruchs 1 aufweist.

Weitere vorteilhafte Ausgestaltungen der Erfindung sind den Unteransprüchen 2 bis 9 zu entnehmen.

Erfindungsgemäß weist die Ringdichtung eine Stützlippe mit einer Stützlippenspitze und einer der Rohrmuffe zugewandten Stützlippenaußenflanke sowie einer dem Einsteckrohr zugewandten Stützlippeninnenflanke auf. Die Stützlippe ist dabei aus einer Grundposition im Vorverbindungszustand der Rohrverbindung, in dem das Einsteckrohr noch kontaktlos zur Ringdichtung ist, in eine Dichtungsposition im Verbindungszustand der Rohrverbindung verbringbar ausgebildet. Dabei ist die Stützlippenspitze in der Grundposition an der ersten Sickenwand anliegend ausgebildet und die Stützlippeninnenflanke ist in der Dichtungsposition an der Außenmantelfläche des Einsteckrohres anliegend ausgebildet. In dieser Dichtungsposition ist ein Eintrittsspalt zwischen der Stützlippe und der ersten Sickenwand zu einer zumindest von der ersten Sickenwand und der Ringdichtung begrenzten Kammer angeordnet. Die Stützlippe übernimmt durch diese Ausgestaltung eine Doppelfunktion. In der Grundposition der Stützlippe im Vorverbindungszustand der Rohrverbindung ist die Lippenspitze an der ersten Sickenwand anliegend ausgebildet. In dieser Stellung schützt die Stützlippe die Ringdichtung an einem Herausfallen aus der Ringsicke und verhindert zudem ein Eindringen von Schmutz in die Ringsicke. In der Dichtungsposition der Stützlippe ist zum einen die Stützlippeninnenflanke an der Außenmantelfläche des Einsteckrohres anliegend ausgebildet. Gleichzeitig ist ein Eintrittsspalt zwischen der Stützlippe und der ersten Sickenwand zu einer zumindest von der ersten Sickenwand und der Ringdichtung begrenzten Kammer angeordnet. Durch diesen Eintrittsspalt kann außerhalb der Rohrverbindung befindliches Grundwasser eindringen und dadurch die Stützlippe mit deren Stützlippeninnenflanke an die Außenmantelfläche des Einsteckrohres pressen. Je größer dabei der Druck des in den Eintrittsspalt eindringenden Grundwassers ist, desto stärker wird die Stützlippeninnenflanke an die Außenmantelfläche des Einsteckrohres gepresst. Die Dichtwirkung der Stützlippe gegenüber der Außenmantelfläche wird dadurch mit zunehmendem Druck des auf die Ringdichtung von außerhalb des Rohres einwirkenden Grundwassers erhöht. Die Rohrverbindung ist dadurch insgesamt bei vergleichbarem Materialeinsatz dichter gegenüber von außerhalb der Rohrverbindung in die Rohrverbindung eintretendem Grundwasser als vergleichbare Rohrverbindungen.

Bevorzugt ist die Stützlippe durch eine Kombination aus elastischer Deformation und einer Kippbewegung der Ringdichtung von der Grundposition in die Dichtungsposition verbringbar ausgebildet. Mit Vorteil ist der Eintrittsspalt zur Kammer in der Grundposition der Stützlippe geschlossen und wird erst durch die Verbringung der Stützlippe in die Dichtungsposition gebildet.

In einer besonders bevorzugten Ausgestaltung der Erfindung weist die Stützlippe in deren Dichtungsposition im Querschnitt auf einer Kurve angeordnete Mittelpunkte auf, wobei die Tangenten zu dieser Kurve jeweils stumpfe Winkel mit der Außenmantelfläche zu der Seite der Rohrverbindung hin bilden, die vom Einsteckende weiter entfernt ist. Durch diese Ausgestaltung wird erreicht, dass der Andruck der Stützlippeninnenflanke an die Außenmantelfläche des Einsteckrohres bei einem Grundwassereintritt in den Eintrittsspalt und die darüber zugängliche Kammer mit steigendem Wasserdruck ebenfalls ansteigt und nicht infolge des Wasserdrucks aufgedrückt wird, wie im Stand der Technik.

Mit Vorteil weisen die Innendichtlippen eine unter den Innendichtlippen im Vorverbindungszustand den kleinsten Radius aufweisende Hauptdichtlippe auf. Die Hauptdichtlippe ist somit diejenige Innendichtlippe, die den kleinsten Radius im Vorverbindungszustand verglichen mit den anderen Innendichtlippen hat. Der Radius der Hauptdichtlippe ist dabei kleiner als der Radius der Außenmantelfläche des Einsteckrohres, und die Hauptdichtlippe ist innerhalb der Ringverbindung dergestalt mit der Stützlippe verbunden, dass bei einer Lageveränderung der Hauptdichtlippe relativ zur Rohrmuffe infolge eines Wegdrückens der Hauptdichtlippe durch das Einstecken des Einsteckrohres in die Rohrmuffe die Stützlippe mitziehbar und von deren Grundposition in deren Dichtungsposition verbringbar ausgebildet ist. Im Verlaufe der Herstellung des Verbindungszustandes der Rohrverbindung wird das Einsteckrohr in die Rohrmuffe eingesteckt und trifft dort als erstes infolge der Ausgestaltung der Radien der Innendichtlippen zuerst auf die Hauptdichtlippe. Diese wird von dem Einsteckrohr weggedrückt, wodurch es zu einer Deformation und Kippbewegung der Rohrdichtung kommt. Die Hauptdichtlippe ist dabei innerhalb der Ringverbindung dergestalt mit der Stützlippe verbunden, dass die Lageveränderung der Hauptdichtlippe auch zu einer Lageveränderung der Stützlippe relativ zur Rohrmuffe führt. Die Stützlippe kippt dabei aus der Grundposition in deren Dichtungsposition.

Mit Vorteil ist der Radius der Stützlippe in der Grundposition größer als der Radius der Außenmantelfläche des Einsteckrohres. Durch diese Ausgestaltung kann das Einsteckrohr mit einem geringen Reibungswiderstand in die Rohrmuffe eingesteckt werden, da die Stützlippe das Einsteckrohr durch Reibungskräfte erst an einem weiteren, tiefergehenden Einstecken in die Rohrmuffe hindert, wenn das Einsteckrohr die Stützlippe bereits passiert hat und auf die Hauptdichtlippe getroffen ist.

Die Ringdichtung ist im Vorverbindungszustand der Rohrverbindung mit deren der Stützlippe entgegengesetzten Flanke an der weiteren Sickenwand anliegend ausgebildet. Gleichzeitig können die Stützlippenaußenflanke sowie die Stützlippeninnenflanke jeweils konkav und/oder eben ausgebildet sein. Die Flanken können dabei auch zunächst eben und anschließend konkav gewölbt ausgebildet sein. Mit Vorteil weist zumindest die Stützlippe eine Shore-Härte A zwischen 55 und 65 auf, insbesondere zwischen 58 und 62, und ist in einem Abstand von 5 mm zur Stützlippenspitze im Querschnitt 2 bis 4 mm breit. Unabhängig hiervon ist die Stützlippe bevorzugt im vorgenannten Härtebereich liegend ausgebildet und hat in einem Abstand von 10 mm zur Spitzlippenspitze im Querschnitt eine Breite von 4 bis 8 mm, insbesondere 5 bis 7 mm. Durch diese Ausgestaltungen wird jeweils unabhängig voneinander erreicht, dass auch bei größeren Schwankungen der Breite der Ringsicke die Stützlippe in deren Grundposition im Vorverbindungszustand stets an der ersten Sickenwand anliegt und das Eindringen von Schmutz in die Ringsicke verhindert sowie ein Herausfallen oder sich Verdrehen der Ringdichtung aus der Ringsicke bzw. innerhalb der Ringsicke verhindert wird.

Weitere vorteilhafte Ausgestaltungen sind den Unteransprüchen sowie dem nachfolgend beschriebenen schematischen Ausführungsbeispiel zu entnehmen; es zeigen:
Fig. 1 eine erfindungsgemäße Rohrverbindung im Vorverbindungszustand in einer geschnittenen Darstellung, nur die Schnittflächen zeigend,

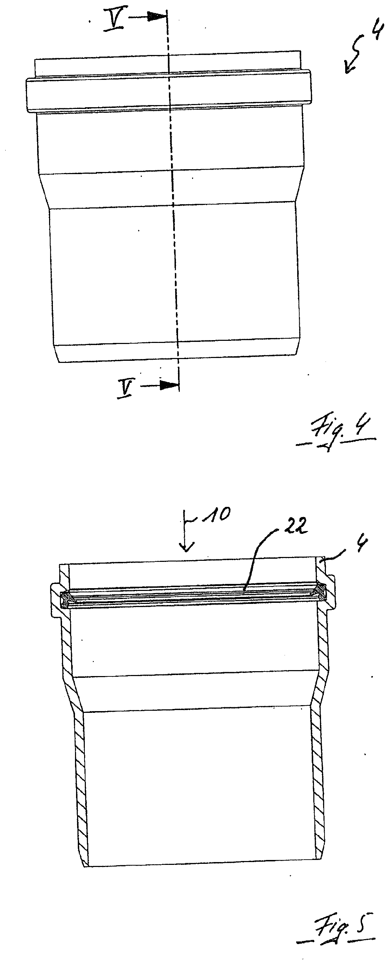

Fig. 2 den Gegenstand aus Fig. 5 mit teilweise in die Rohrmuffe eingeführtem Einsteckrohr,
Fig. 3 den Gegenstand aus Fig. 5 im Verbindungszustand,
Fig. 4 eine erfindungsgemäße Rohrmuffe in einer Seitenansicht,
Fig. 5 den Gegenstand aus Fig. 1 in einer Schnittdarstellung nach der Linie V-V,

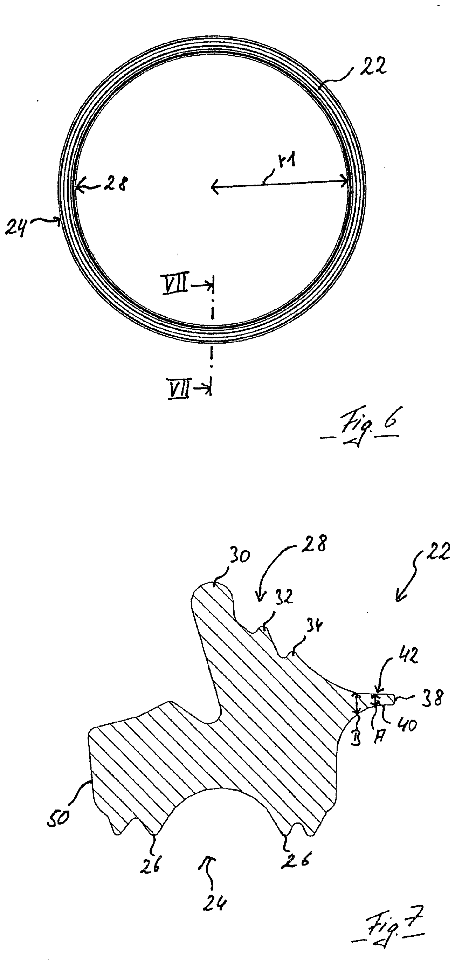

Fig. 6 eine erfindungsgemäße Ringdichtung in einer Aufsicht und
Fig. 7 den Gegenstand aus Fig. 6 in einer Schnittdarstellung nach der Linie VII-VII in Fig. 6.

Nachfolgend werden gleichwirkende Elemente mit einem einheitlichen Bezugszeichen versehen, sofern dies sinnvoll erscheint. Die nachfolgend anhand des Ausführungsbeispiels beschriebenen Merkmale der Erfindung können auch in anderen Kombinationen als im Ausführungsbeispiels gezeigt und nachfolgend erläutert Gegenstand der Erfindung sein.

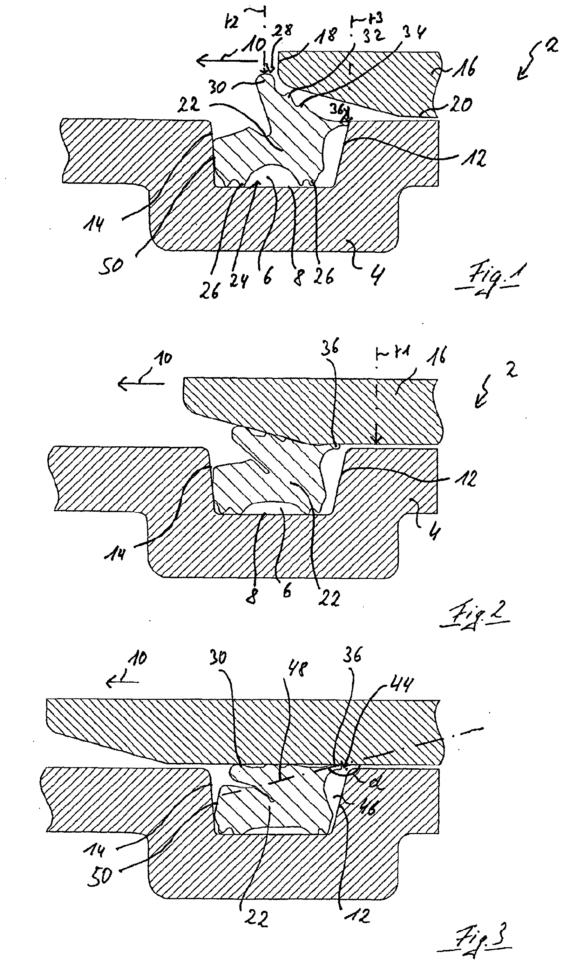

Fig. 1 bis Fig. 3 zeigen eine erfindungsgemäße Rohrverbindung 2 in einer geschnittenen Darstellung, bei der der Übersicht halber nur die Schnittflächen abgebildet sind. Die Rohrverbindung 2 weist eine Rohrmuffe 4 mit einer Ringsicke 6 auf. Die Ringsicke 6 ist von einem Sickengrund 8 und einer in Einsteckrichtung 10, dargestellt durch Pfeil 10, ersten Sickenwand 12 und einer dieser gegenüberliegenden weiteren Sickenwand 14 begrenzt. Die Rohrverbindung 2 weist zudem ein Einsteckrohr 16 mit einem Einsteckende 18 und einer Außenmantelfläche 20 auf. Das Einsteckende 18 ist im Ausführungsbeispiel außenseitig abgeschrägt.

In der Ringsicke 6 befindet sich eine elastische Ringdichtung 22, die mit an einer Ringdichtungsaußenseite 24 angeordneten Außendichtlippen 26 am Sickengrund 8 anliegt. Die Ringdichtung 22 weist an der der Ringdichtungsaußenseite 24 gegenüberliegenden Ringdichtungsinnenseite 28 ein oder mehrere Innendichtlippen 30, 32, 34 zur Abdichtung gegenüber der Außenmantelfläche 20 des Einsteckrohres 16 im Verbindungszustand der Rohrverbindung 2 auf. Der Verbindungszustand der Rohrverbindung 2 ist in Fig. 3 dargestellt. In Fig. 1 ist hingegen der Vorverbindungszustand der Rohrverbindung 2 dargestellt, in dem das Einsteckrohr 16 noch kontaktlos zur Ringdichtung 22 ist. In Fig. 2 ist der Übergang von dem in Fig. 1 dargestellten Vorverbindungszustand in den in Fig. 3 dargestellten Verbindungszustand veranschaulicht.

Die Ringdichtung 22 weist eine Stützlippe 36 mit einer Stützlippenspitze 38 und einer der Rohrmuffe 4 zugewandten Stützlippenaußenflanke 40 sowie einer dem Einsteckrohr 16 zugewandten Stützlippeninnenflanke 42 auf. Die Stützlippe 36 ist aus einer Grundposition im Vorverbindungszustand der Rohrverbindung 2, in eine Dichtungsposition im Verbindungszustand der Rohrverbindung 2 verbringbar ausgebildet. Dabei ist die Stützlippenspitze 38 in der Grundposition an der ersten Sickenwand 12 anliegend ausgebildet, wie in Fig. 1 dargestellt. In der Dichtungsposition, dargestellt in Fig. 3, ist die Stützlippeninnenflanke 42 an der Außenmantelfläche 20 des Einsteckrohres 16 anliegend ausgebildet. Zudem ist in dieser Dichtungsposition ein Eintrittsspalt 44 zwischen der Stützlippe 36 und der ersten Sickenwand 12 zu einer zumindest von der ersten Sickenwand 12 und der Ringdichtung 22 begrenzten Kammer 46 angeordnet.

Wie aus Fig. 1 bis 3 ersichtlich ist, ist die Stützlippe 36 durch eine Kombination aus elastischer Deformation und einer Kippbewegung der Ringdichtung 22 von der Grundposition, dargestellt in Fig. 1, in die Dichtungsposition, dargestellt in Fig. 3, verbringbar ausgebildet. Der Eintrittsspalt 44 zur Kammer 46 ist in der Grundposition der Stützlippe 36 geschlossen und entsteht erst durch die Verbringung der Stützlippe 36 von der Grundposition in die Dichtungsposition.

Die Stützlippe 36 weist in deren Dichtungsposition im Querschnitt auf einer Kurve angeordnete Mittelpunkte auf, wobei die Tangenten 48 zu dieser Kurve stumpfe Winkel α mit der Außenmantelfläche 20 zu der Seite der Rohrverbindung 2 hin bilden, die vom Einsteckende 18 des Einsteckrohres 16 weiter entfernt ist. Im Ausführungsbeispiel ist exemplarisch eine dieser Tangenten 48 eingezeichnet.

Die Innendichtlippen 30, 32, 34 weisen eine unter den Innendichtlippen 30, 32, 34 im Vorverbindungszustand den kleinsten Radius r1 aufweisende Hauptdichtlippe 30 auf und der Radius r1 der Hauptdichtlippe 30 ist kleiner als der Radius r2 der Außenmantelfläche 20 des Einsteckrohres 16. Die Hauptdichtlippe 30 ist dabei innerhalb der Ringdichtung 22 dergestalt mit der Stützlippe 36 verbunden, dass bei einer Lageveränderung der Hauptdichtlippe 30 relativ zur Rohrmuffe 4 infolge eines Wegdrückens der Hauptdichtlippe 30 durch das Einstecken des Einsteckrohres 16 in die Rohrmuffe 4 die Stützlippe 36 mitziehbar und von deren Grundposition in deren Dichtungsposition verbringbar ausgebildet ist. Dieser Ablauf ist in den Fig. 1 bis 3 dargestellt.

Der Radius r3 der Stützlippe 36 ist in der Grundposition der Stützlippe 36 größer als der Radius r2 der Außenmantelfläche 20 des Einsteckrohres 16, wie in Fig. 1 dargestellt ist. Infolgedessen entsteht ein Kontakt zwischen der Stützlippe 36 und der Außenmantelfläche 20 des Einsteckrohres 16 erst nachdem die Stützlippe 36 infolge des Wegdrückens der Hauptdichtlippe 30 durch das Einsteckende 18 von der Grundposition in die Dichtposition gekippt wurde.

Die Ringdichtung 22 ist im Vorverbindungszustand der Rohrverbindung 2 mit deren der Stützlippe 36 entgegengesetzten Flanke 50 an der weiteren Sickenwand 14 anliegend ausgebildet. Gleichzeitig sind die Stützlippenaußenflanke 40 sowie die Stützlippeninnenflanke 42 jeweils konkav und/oder eben ausgebildet. Im Ausführungsbeispiel ist die Stützlippeninnenflanke 42 beginnend von der Stützlippenspitze 38 zunächst eben und anschließend konkav werdend ausgebildet. Die Stützlippenaußenflanke 40 ist hingegen durchgehend konkav ausgebildet.

Im Ausführungsbeispiel weist die Stützlippe eine Härte-Shore A zwischen 55 und 65, insbesondere zwischen 58 und 62 auf.

In einem Abstand von 5 mm zur Stützlippenspitze 38 ist die Stützlippe 36 im Querschnitt A 2 bis 4 mm breit. In einem Abstand von 10 mm zur Stützlippenspitze 38 ist die Stützlippe 36 im Querschnitt B 4 bis 8 mm, insbesondere 5 bis 7 mm breit.

### Bezugszeichen:

2 Rohrverbindung
4 Rohrmuffe
6 Ringsicke
8 Sickengrund
10 Einsteckrichtung
12 erste Sickenwand
14 weitere Sickenwand
16 Einschubrohr
18 Einsteckende
20 Außenmantelfläche
22 Ringdichtung
24 Ringdichtungsaußenseite
26 Außendichtlippen
28 Ringdichtungsinnenseite
30, 32, 34 Innendichtlippen
36 Stützlippe
38 Stützlippenspitze
40 Stützlippenaußenfläche
42 Stützlippeninnenfläche
44 Eintrittsspalt
46 Kammer
48 Tangente
α stumpfer Winkel
30 Hauptdichtlippe
r1 Radius der Hauptdichtlippe
r2 Radius der Außenmantelfläche
r3 Radius der Stützlippe
50 Flanke der Ringdichtung
A Querschnitt bei 5 mm
B Querschnitt bei 10 mm

## Patentansprüche

1. Rohrverbindung (2),
mit einer Rohrmuffe (4), die eine Ringsicke (6) aufweist, welche von einem Sickengrund (8) und einer in Einsteckrichtung (10) ersten Sickenwand (12) und einer dieser gegenüberliegenden weiteren Sickenwand (14) begrenzt ist, und
mit einem Einsteckrohr (16), mit einem Einsteckende (18) und einer Außenmantelfläche (20), sowie
mit einer in der Ringsicke (6) befindlichen, elastischen Ringdichtung (22), die mit an einer Ringdichtungsaußenseite (24) angeordneten Außendichtlippen (26) am Sickengrund (8) anliegt und die an der der Ringdichtungsaußenseite (24) gegenüberliegenden Ringdichtungsinnenseite (28) eine oder mehrere Innendichtlippen (30, 32, 34) zur Abdichtung gegenüber der Außenmantelfläche (20) des Einsteckrohres (16) im Verbindungszustand der Rohrverbindung (4) aufweist, in dem das Einsteckrohr (16) in die Rohrmuffe (4) eingesteckt und die Außenmantelfläche (20) des Einsteckrohres (16) über die Ringdichtung (22) gegenüber der Rohrmuffe (4) abgedichtet ist,
wobei die Ringdichtung (22) eine Stützlippe (36) mit einer Stützlippenspitze (38) und einer der Rohrmuffe (4) zugewandten Stützlippenaußenflanke (40) sowie einer dem Einsteckrohr (16) zugewandten Stützlippeninnenflanke (42) aufweist,
wobei die Stützlippe (36) aus einer Grundposition im Vorverbindungszustand der Rohrverbindung (2), in dem das Einsteckrohr (16) noch kontaktlos zur Ringdichtung (22) ist, in eine Dichtungsposition im Verbindungszustand der Rohrverbindung (2) verbringbar ausgebildet ist, und
wobei die Stützlippenspitze (38) in der Grundposition an der ersten Sickenwand (12) anliegend ausgebildet ist und in der Dichtungsposition die Stützlippeninnenflanke (42) an der Außenmantelfläche (20) des Einsteckrohres (16) anliegend ausgebildet ist und in dieser Dichtungsposition ein Eintrittsspalt (44) zwischen der Stützlippe (36) und der ersten Sickenwand (12) zu einer zumindest von der ersten Sickenwand (12) und der Ringdichtung (22) begrenzten Kammer (46) angeordnet ist,
**dadurch gekennzeichnet, dass**
die Ringdichtung (22) im Vorverbindungszustand der Rohrverbindung (2) mit ihrer der Stützlippe (36) entgegengesetzten Flanke (50) an der weiteren Sickenwand (14) anliegend ausgebildet ist.

2. Rohrverbindung (2) nach Anspruch 1, bei welcher die Stützlippe (36) durch eine Kombination aus elastischer Deformation und einer Kippbewegung der Ringdichtung (22) von der Grundposition in die Dichtungsposition verbringbar ausgebildet ist.

3. Rohrverbindung (2) nach einem der vorhergehenden Ansprüche, bei welcher die Ringdichtung (22) und die Ringsicke (6) dergestalt ausgebildet sind, dass der Eintrittsspalt (44) zur Kammer (46) in der Grundposition der Stützlippe (36) geschlossen ist und erst durch die Verbringung der Stützlippe (36) in die Dichtungsposition entsteht.

4. Rohrverbindung (2) nach einem der vorhergehenden Ansprüche, bei welcher die Stützlippe (36) in deren Dichtungsposition im Querschnitt auf einer Kurve angeordnete Mittelpunkte aufweist, wobei die Tangenten (48) zu dieser Kurve stumpfe Winkel (α) mit der Außenmantelfläche (20) zu der Seite der Rohrverbindung hin bilden, die von dem Einsteckende (18) weiter entfernt ist.

5. Rohrverbindung (2) nach einem der vorhergehenden Ansprüche, bei welcher die Innendichtlippen (30, 32, 34) eine unter den Innendichtlippen (30, 32, 34) im Vorverbindungszustand den kleinsten Radius (r1) aufweisende Hauptdichtlippe (30) aufweisen und der Radius (r1) der Hauptdichtlippe (30) kleiner ist als der Radius (r2) der Außenmantelfläche (20) des Einsteckrohres (16), und die Hauptdichtlippe (30) innerhalb der Ringverbindung (2) dergestalt mit der Stützlippe (36) verbunden ist, dass bei einer Lageveränderung der Hauptdichtlippe (30) relativ zur Rohrmuffe (4) in Folge eines Wegdrückens der Hauptdichtlippe (30) durch das Einstecken des Einsteckrohres (16) in die Rohrmuffe (4) die Stützlippe (36) mitziehbar und von deren Grundposition in deren Dichtungsposition verbringbar ausgebildet ist.

6. Rohrverbindung (2) nach einem der vorhergehenden Ansprüche, bei welcher der Radius (r3) der Stützlippe (36) in der Grundposition größer ist als der Radius (r2) der Außenmantelfläche (20) des Einsteckrohres (16).

7. Rohrverbindung (2) nach einem der vorhergehenden Ansprüche, bei welcher die Stützlippenaußenflanke (40) sowie die Stützlippeninnenflanke (42) jeweils konkav und/oder eben ausgebildet sind.

8. Rohrverbindung (2) nach einem der vorhergehenden Ansprüche, bei welcher zumindest die Stützlippe (36) eine Härte Shore A zwischen 55 und 65, insbesondere 58 und 62, aufweist und in einem Abstand von 5 mm zur Stützlippenspitze (38) im Querschnitt (A) 2 bis 4 mm breit ist.

9. Rohrverbindung (2) nach einem der vorhergehenden Ansprüche, bei welcher zumindest die Stützlippe (36) eine Härte Shore A zwischen 55 und 65, insbesondere 58 und 62, aufweist und in einem Abstand von 10 mm zur Stützlippenspitze (38) im Querschnitt (B) 4 bis 8 mm, insbesondere 5 bis 7 mm, breit ist.

## Claims

1. Pipe connection (2),
with a pipe sleeve (4) that has an annular bead (6) that is bounded by a bead base (8) and a first bead wall (12) in the insertion direction (10) and a further bead wall (14) opposite said first bead wall, and
with an insertion pipe (16), with an insertion end (18) and an outer casing surface (20), and
with an elastic ring seal (22) located in the annular bead (6) that, with outer sealing lips (26) arranged on an outer ring seal side (24), abuts on the bead base (8) and that, on the inner ring seal side (28) opposite the outer ring seal side (24), has one or more inner sealing lips (30, 32, 34) for sealing off against the outer casing surface (20) of the insertion pipe (16) in the connected state of the pipe connection (4), in which the insertion pipe (16) is inserted into the pipe sleeve (4) and the outer casing surface (20) of the insertion pipe (16) is sealed off against the pipe sleeve (4) via the ring seal (22),
wherein the ring seal (22) has a support lip (36) with a support lip tip (38) and an outer support lip flank (40) facing the pipe sleeve (4), and an inner support lip flank (42) facing the insertion tube (16),
wherein and the support lip (36) is designed so that it can be moved from a home position in the pre-connected state of the pipe connection (2), in which the insertion pipe (16) is still not in contact with the ring seal (22), into a sealing position in the connected state of the pipe connection (2), and
wherein the support lip tip (38) is designed to abut on the first bead wall (12) in the home position and the inner support lip flank (42) is designed to abut on the outer casing surface (20) of the insertion pipe (16) in the sealing position, and, in this sealing position, an entrance gap (44) to a chamber (46) bounded at least by the first bead wall (12) and the ring seal (22) is arranged between the support lip (36) and the first bead wall (12),
**characterised in that**
the ring seal (22) is designed to abut on the further bead wall (14) in the pre-connected state of the pipe connection (2) with its flank (50) opposite the support lip (36).

2. Pipe connection (2) according to claim 1, in which the support lip (36) is designed so that it can be moved from the basic position into the sealing position through a combination of elastic deformation and a tilting movement of the ring seal (22).

3. Pipe connection (2) according to any one of the preceding claims, in which the annular seal (22) and the annular bead (6) are designed such that the entrance gap (44) to the chamber (46) is closed in the home position of the support lip (36) and only changes to the sealing position due to the movement of the support lip (36).

4. Pipe connection (2) according to any one of the preceding claims, in which the support lip (36), in its sealing position, has centre points arranged on a curve in cross-section, the tangents (48) to this curve forming obtuse angles (α) with the outer casing surface (20) towards the side of the pipe connection that is farther from the insertion end (18).

5. Pipe connection (2) according to any one of the preceding claims, in which the inner sealing lips (30, 32, 34) have a main sealing lip (30) below the inner sealing lips (30, 32, 34), said main sealing lip having the smallest radius (r1) in the pre-connected state and the radius (r1) of the main sealing lip (30) is smaller than the radius (r2) of the outer casing surface (20) of the insertion tube (16), and the main sealing lip (30) is connected to the support lip (36) inside the annular connection (2) in such a manner that in the event of a position change of the main sealing lip (30) relative to the pipe sleeve (4) as a result of the main sealing lip (30) pushing away, the support lip (36) is designed so that it can be pulled along by the insertion of the insertion pipe (16) into the pipe sleeve (4) and moved from its home position into its sealing position.

6. Pipe connection (2) according to any one of the preceding claims, in which the radius (r3) of the support lip (36) is larger in the home position than the radius (r2) of the outer casing surface (20) of the insertion pipe (16).

7. Pipe connection (2) according to any one of the preceding claims, in which the outer support lip flank (40) and the inner support lip flank (42) are respectively concave and/or flat.

8. Pipe connection (2) according to any one of the preceding claims, in which at least the support lip (36) has a Shore A hardness of between 55 and 65, in particular 58 and 62, and is 2 to 4 mm wide in cross-section (A) at a distance of 5 mm from the support lip tip (38).

9. Pipe connection (2) according to any one of the preceding claims, in which at least the support lip (36) has a Shore A hardness of between 55 and 65, in particular 58 and 62, and is 5 to 7 mm, in particular, 4 to 8 mm wide in cross-section (B) at a distance of 10 mm from the support lip tip (38).

## Revendications

1. Raccord de tuyauterie (2),
avec un manchon de tuyau (4), qui comporte une moulure annulaire (6), laquelle est délimitée par un fond de moulure (8) et par une première paroi de moulure (12) dans la direction d'enfoncement (10) et une autre paroi de moulure (14) à l'opposé de la première, et
avec un tuyau à emboîter (16), avec une extrémité à emboîter (18) et une surface enveloppante extérieure (20), ainsi que
avec un joint d'étanchéité annulaire (22) élastique, qui se situe dans la moulure annulaire (6), qui s'appuie au fond de moulure (8) avec des lèvres d'étanchéité extérieures (26) agencées au niveau d'un côté extérieur de joint d'étanchéité annulaire (24) et qui comporte au niveau du côté intérieur de joint d'étanchéité annulaire (28) opposé au côté extérieur de joint d'étanchéité annulaire (24) une ou plusieurs lèvres d'étanchéité intérieures (30, 32, 34) afin d'assurer l'étanchéité par rapport à la surface enveloppante extérieure (20) du tuyau à emboîter (16) lorsque le raccord de tuyauterie (4) est dans l'état raccordé dans lequel le tuyau à emboîter (16) est emboîté dans le manchon de tuyau (4) et la surface enveloppante extérieure (20) du tuyau à emboîter (16) est étanchéifiée par rapport au manchon de tuyau (4) par l'intermédiaire du joint d'étanchéité annulaire (22),
dans lequel le joint d'étanchéité annulaire (22) comporte une lèvre de support (36) avec une pointe de lèvre de support (38) et avec un flanc extérieur de lèvre de support (40) proche du manchon de tuyau (4) ainsi qu'avec un flanc intérieur de lèvre de support (42) proche du tuyau à emboîter (16),
dans lequel la lèvre de support (36) est conçue de manière à pouvoir être déplacée d'une position de base dans l'état avant raccordement du raccord de tuyauterie (2) dans lequel le tuyau à emboîter (16) n'est pas encore en contact avec le joint d'étanchéité annulaire (22) à une position d'étanchéité dans l'état raccordé du raccord de tuyauterie (2), et
dans lequel la pointe de lèvre de support (38) est conçue de manière à, dans la position de base, s'appuyer contre la première paroi de moulure (12) et le flanc intérieur de lèvre de support (42) est conçu de manière à, dans la position d'étanchéité, s'appuyer à la surface enveloppante extérieure (20) du tuyau à emboîter (16) et une fente d'entrée (44) est, dans cette position d'étanchéité, agencée entre la lèvre de support (36) et la première paroi de moulure (12) vers une chambre (46) délimitée au moins par la première paroi de moulure (12) et le joint d'étanchéité annulaire (22),
**caractérisé en ce que**
le joint d'étanchéité annulaire (22) est conçu de manière à, dans l'état avant raccordement du raccord de tuyauterie (2), s'appuyer avec son flanc (50) opposé à la lèvre de support (36) contre l'autre paroi de moulure (14).

2. Raccord de tuyauterie (2) selon la revendication 1, dans lequel la lèvre de support (36) est conçue de manière à pouvoir être déplacée de la position de base à la position d'étanchéité grâce à une combinaison d'une déformation élastique et d'un mouvement de basculement du joint d'étanchéité annulaire (22).

3. Raccord de tuyauterie (2) selon l'une des revendications précédentes, dans lequel le joint d'étanchéité annulaire (22) et la moulure annulaire (6) sont conçus de telle sorte que la fente d'entrée (44) vers la chambre (46) est fermée dans la position de base de la lèvre de support (36) et ne se crée que par le déplacement de la lèvre de support (36) dans la position d'étanchéité.

4. Raccord de tuyauterie (2) selon l'une des revendications précédentes, dans lequel la lèvre de support (36) a, dans sa position d'étanchéité, des points centraux agencés en coupe transversale sur une courbe, les tangentes (48) à cette courbe formant des angles (α) obtus avec la surface enveloppante extérieure (20) vers le côté du raccord de tuyauterie qui est plus éloigné de l'extrémité d'emboîtement (18).

5. Raccord de tuyauterie (2) selon l'une des revendications précédentes, dans lequel les lèvres d'étanchéité intérieures (30, 32, 34) comportent une lèvre d'étanchéité principale (30) ayant le plus petit rayon (r1) sous les lèvres d'étanchéité intérieures (30, 32, 34) dans l'état avant raccordement et le rayon (r1) de la lèvre d'étanchéité principale (30) est plus petit que le rayon (r2) de la surface enveloppante extérieure (20) du tuyau à emboîter (16), et la lèvre d'étanchéité principale (30) est reliée à l'intérieur du raccord annulaire (2) de telle sorte à la lèvre de support (36) que, lors d'un changement de position de la lèvre d'étanchéité principale (30) par rapport au manchon de tuyauterie (4) à la suite d'un repoussement de la lèvre d'étanchéité principale (30) par l'emboîtement du tuyau à emboîter (16) dans le manchon de tuyau (4), la lèvre de support (36) est conçue de manière à pouvoir être tirée en même temps et à être déplacée de sa position de base à sa position d'étanchéité.

6. Raccord de tuyauterie (2) selon l'une des revendications précédentes, dans lequel le rayon (r3) de la lèvre de support (36) dans la position de base est plus grand que le rayon (r2) de la surface enveloppante extérieure (20) du tuyau à emboîter (16).

7. Raccord de tuyauterie (2) selon l'une des revendications précédentes, dans lequel le flanc extérieur de lèvre de support (40) et le flanc intérieur de lèvre de support (42) sont conçus à chaque fois concaves et/ou plans.

8. Raccord de tuyauterie (2) selon l'une des revendications précédentes, dans lequel au moins la lèvre de support (36) a une dureté Shore A comprise entre 55 et 65, en particulier entre 58 et 62, et a, à une distance de 5 mm de la pointe de lèvre de support (38), une largeur de 2 à 4 mm en coupe transversale (A).

9. Raccord de tuyauterie (2) selon l'une des revendications précédentes, dans lequel au moins la lèvre de support (36) a une dureté Shore A comprise entre 55 et 65, en particulier entre 58 et 62, et a, à une distance de 10 mm de la pointe de lèvre de support (38), une largeur de 4 à 8 mm, en particulier de 5 à 7 mm, en coupe transversale (B).
